## Europäisches Patentamt
## European Patent Office
## Office européen des brevets

(19)

(11) Veröffentlichungsnummer: **0 213 417**
**B1**

(12) # EUROPÄISCHE PATENTSCHRIFT

(45) Veröffentlichungstag der Patentschrift:
12.07.89

(21) Anmeldenummer: **86110698.7**

(22) Anmeldetag: **02.08.86**

(51) Int. Cl.⁴: **B 65 G 47/14**

(54) **Verfahren und Vorrichtung zum Vereinzeln von Montageteilen.**

(30) Priorität: **05.08.85 AT 2296/85**

(43) Veröffentlichungstag der Anmeldung:
**11.03.87 Patentblatt 87/11**

(45) Bekanntmachung des Hinweises auf die Patenterteilung:
**12.07.89 Patentblatt 89/28**

(84) Benannte Vertragsstaaten:
**AT BE CH DE FR GB IT LI NL SE**

(56) Entgegenhaltungen:
**AT-B-341 426**
**DE-A-2 810 979**
**DE-A-3 012 211**
**DE-A-3 241 397**
**DE-B-2 333 734**

**Die Akte enthält technische Angaben, die nach dem Eingang der Anmeldung eingereicht wurden und die nicht in dieser Patentschrift enthalten sind.**

(73) Patentinhaber: **Sticht, Walter, Karl- Heinrich- Waggerl- Strasse 8, A-4800 Attnang- Puchheim (AT)**

(72) Erfinder: **Sticht, Walter, Karl- Heinrich- Waggerl- Strasse 8, A-4800 Attnang- Puchheim (AT)**

(74) Vertreter: **Wolke, Heidemarie, Dr., Stadtplatz 7, A-4400 Steyr (AT)**

LIBER, STOCKHOLM 1989

## Beschreibung

Die Erfindung betrifft ein Verfahren zum Vereinzeln, Zuführen und Entnehmen von Bauteilen, insbesondere elektronischen Schaltungsteilen, die aus einer ungeordneten Menge von Bauteilen entnommen, vereinzelt und in einer vorbestimmten Lage einem Entnahmebereich zugeführt werden, worauf sie erfaßt und zu einer Ablagestelle verbracht werden, bei dem aus der ungeordneten Menge von Bauteilen Teilgruppen entnommen und während der Fortbewegung mit einer ersten Fördergeschwindigkeit in einem Förderabschnitt vereinzelt und ausgerichtet werden, worauf die Bauteile über einen nachgeordneten Förderweg in den Entnahmebereich verbracht werden,

Es sind bereits die verschiedensten Verfahren und Vorrichtungen zum Vereinzeln, Zuführen und Entnehmen von Bauteilen bekannt. Bei einer derartigen bekannten Vorrichtung - AT-PS-341 426 desselben Anmelders - werden aus der ungeordneten Menge von Bauteilen Teilegruppen entnommen und diese während der Fortbewegung mit einer ersten Fördergeschwindigkeit in einem Förderabschnitt vereinzelt und ausgerichtet. Danach werden die Bauteile in einem nachgeordneten Förderweg in den Entnahmebereich verbracht. Die den Förderabschnitt und den Förderweg bildenden Linearförderer sind in etwa horizontal hintereinander angeordnet, so daß die Teile mit von Förderer zu Förderer steigender Ausrichtungs- und Vereinzelungsrate der Entnahmestation zuführbar sind. Dadurch ist es möglich, einen hohen Wirkungsgrad beim Vereinzeln, Zuführen und Entnehmen von Bauteilen zu erreichen, da durch das Verhältnis der Anzahl der möglichen Lagen der Teile zur Anzahl der zulässigen Lagen in Verbindung mit der Anzahl der Förderer die Menge der in der gewünschten Lage enthaltenen Teile zur Menge der abgewiesenen und wieder in den ursprünglichen Behälter zurückgeführten Teile in einem günstigen Verhältnis stehen.

Weiters ist auch ein Verfahren und eine Vorrichtung zum Transportieren von Bauteilen bekannt - AT-PS-368 104 des selben Anmelders - bei der die vereinzelten Bauteile mittels Druckluft den einzelnen Entnahmestellen zugeführt werden. Durch die Anordnung von Füllstandsmeßwertgebern in einer dem Entnahmebereich vorgeordneten Speicherstrecke kann sichergestellt werden, daß immer eine ausreichende Menge von Bauteilen im Entnahmebereich zur Verfügung steht. Die Füllstandsmeßwertgeber werden daher nur dann aktiviert, wenn die Speicherstrecke mit Bauteilen gefüllt ist, um z. B. eine weitere Anlieferung von Bauteilen in dem Bereich der Speicherstrecke zu unterbinden. Die Wirkung der Füllstandsmeßwertgeber hat daher auf die Anzahl der diese passierenden Teile keinen Einfluß. Mit einer der Förderleitung dieses Lufttransportsystems vorgeordneten Sperrvorrichtung wird dagegen lediglich sichergestellt, daß die Menge der in die Förderleitung einlaufenden Montageteile in einem Ausmaß begrenzt wird, das eine einwandfreie Förderung unter Verwendung des Luftdruckes in der Förderleitung ermöglicht. Mit dem weiteren, im Entnahmebereich angeordneten Meßwertgeber kann bei diesem Verfahren und der Vorrichtung lediglich festgestellt werden, ob noch ein Bauteil im Entnahmebereich vorhanden ist. Solange dies der Fall ist, braucht die Stopvorrichtung nicht geöffnet zu werden, um weitere Teile vom Anfang des Förderweges in den Entnahmebereich bzw. in den Bereich der Speicherstrecke zu verbringen. Dadurch kann aber nicht verhindert werden, daß auf jene Bauteile, die dem im Entnahmebereich befindlichen Bauteil nachfolgen, keine Förderbewegung mehr ausgeübt wird. Jene Bauteile, die sich nämlich zum Zeitpunkt des Einlangen eines Bauteils im Entnahmebereich noch im Förderweg zwischen der Stopvorrichtung und der Speicherstrecke befinden, können auf den im Entnahmebereich liegenden Bauteil auflaufen, bzw. sich aufschieben, wodurch sie sich in den Führungsbahnen im Entnahmebereich verkeilen können. Darüberhinaus soll mit dem bekannten Verfahren und der Vorrichtung lediglich verhindert werden, daß zuviele Teile in den Förderweg zwischen der Stopvorrichtung und der Speicherstrecke gelangen, um zu vermeiden, daß die Förderkraft des Lufttransportsystems nicht ausreicht, um die Teile ordnungsgemäß in den Entnahmebereich bzw. in den Bereich der Speicherstrecke zu fördern.

Der vorliegenden Erfindung liegt nunmehr die Aufgabe zugrunde, ein Verfahren und eine Vorrichtung zum Vereinzeln, Zuführen und Entnehmen von Bauteilen zu schaffen, mit welchem auch sehr kleine und heikle Teile einzeln in die Entnahmeposition verbracht werden können. Darüberhinaus soll es möglich sein, auch Bauteile mit wechselnden Umfangsformen, beispielsweise viereckig, sechseckig oder dgl., jedoch mit in etwa gleicher Projektionsfläche verarbeiten zu können.

Die Aufgabe der Erfindung wird dadurch gelöst, daß ein Übergang jedes einzelnen Bauteiles vom Förderabschnitt auf den Förderweg festgestellt und daran anschließend die Förderung zwischen dem Förderabschnitt und dem Förderweg oder die Entnahme von Teilmengen sowie die Förderung im Förderabschnitt stillgesetzt wird, worauf nach dem Eintreffen eines einzelnen Bauteiles im Entnahmebereich die Förderung im Förderweg unterbrochen wird. In vorteilhafter und überraschend einfacher Weise wird dadurch erreicht, daß jeweils nur ein einzelneß Bauteil in den Entnahmebereich gelangen kann und in diesem dann vereinzelt zur Entnahme bereit steht. Besonders vorteilhaft hat sich die Anwendung dieses Verfahrens beim Zuführen von Chips, wie sie in der Elektronikindustrie in großem Umfang benötigt werden, erwiesen. Es ist nämlich nunmehr möglich, Chips mit in etwa gleich großen Außenabmessungen, jedoch unterschiedlich äußeren Umfangsformen mit dem gleichen Verfahren zu Vereinzeln, da der Abrieb der Teile bzw. die mechanische Beanspruchung durch den Wegfall von mechanischen Vereinzelungsvorrichtungen aufgrund der Verwendung des sogenannten Stop-and-Go-Betriebes gering ist. Unter Stop-and-Go-Betriebes wird verstanden, daß die gesamte Förderung, Vereinzelung und Ausrichtung der Bauteile bei Vorliegen eines vereinzelten Bauteils im Entnahmebereich jeweils unterbrochen wird. Dadurch wird ohne zusätzliche Maßnahmen wie Stopvorrichtungen, Höhenführungsleisten und dgl. vermieden, daß sich mehrere Bauteile übereinanderschieben oder im Entnahmebereich zwischen den Führungsorganen der Führungsvorrichtung verklemmen können.

Es ist aber auch eine andere Ausbildung des einleitend beschriebenen Verfahrens zum Vereinzeln, Zuführen und Entnehmen von Bauteilen, insbesondere elektronischen Schaltungsteilen, möglich.

Dieses Verfahren ist dadurch gekennzeichnet, daß eine vorbestimmbare Anzahl von Bauteilen vom Förderabschnitt auf den Förderweg übergeht und deren Anzahl ermittelt wird und daran anschließend die Förderung zwischen dem Förderabschnitt und dem Förderweg oder die Entnahme von Teilmengen sowie die Förderung im Förderabschnitt so lange stillgesetzt wird, bis die vor dem Unterbrechen der Förderung im Förderabschnitt auf den Förderweg übergegangenen Bauteile aufeinanderfolgend und einzeln dem Entnahmebereich zugeführt und von diesem entnommen wurden, wobei jeweils nach dem Eintreffen eines einzelnen Bauteiles im Entnahmebereich auch die Förderung im Förderweg unterbrochen wird und nach der Entnahme dieses Bauteiles wieder aufgenommen wird. Durch die in den einzelnen Förderbereichen unterschiedlichen Fördergeschwindigkeiten bzw. die Überwachung des Übergangs der einzelnen Bauteile zwischen den einzelnen Förderbereichen ist es möglich, die Anzahl der gleichzeitig in den Entnahmebereich gelangenden Einzelteile im jeweils gewünschten Ausmaß festzulegen. Wird die Anzahl der Bauteile, die vom Förderabschnitt auf den Förderweg übergehen, so bemessen, daß die Bauteile nicht aufeinander auflaufen, so kann durch periodisches Aus- und Einschalten der Antriebsvorrichtung im Förderweg ein Bauteil nach dem anderen in den Entnahmebereich verbracht und dieses einzelliegende Bauteil in diesem Entnahmebereich erfaßt und entnommen werden. Während die Anzahl der in den Förderweg vom Förderabschnitt übergetretenen Bauteile durch periodisches Ein- und Ausschalten der Förderung im Förderweg abgearbeitet wird, kann der Transport der Montageteile in vorteilhafter Weise wenn gewünscht ebenso stillgesetzt werden wie die Bildung von Teilmengen von Bauteilen. In Kombination mit den vorstehend genannten Maßnahmen hat sich im Zuge der Versuche ein weiterer überraschender Effekt der erfindungsgemäßen Lösung herausgestellt, der darin liegt, daß durch die unterschiedliche Geschwindigkeit in den Förderbereichen unter Still setzen der Förderung, wenn ein vereinzelter bzw. ein einzelner Bauteil den Entnahmebereich oder den diesem vorgeordneten Förderbereich erreicht hat, verhindert wird, daß sich Teile, deren Dicke nur einen Bruchteil ihrer Breite oder Länge beträgt, übereinanderschieben können. Dies gelingt beim erfindungsgemäßen Verfahren und der Vorrichtung, ohne daß hierzu entsprechende Höhenführungsvorrichtungen oder dgl. anzuordnen sind. Dadurch können derartige Teile durch eine Bewegung senkrecht zur Förderbahn - also zur Auflagefläche der Bauteile - entnommen werden.

Gemäß einer Weiterbildung der Erfindung ist vorgesehen, daß die Teilgruppen durch Förderung mittels Vibration aus der ungeordneten Menge von Bauteilen entnommen werden und daß die Fördergeschwindigkeit der Teilgruppen geringer ist als die erste Fördergeschwindigkeit im Förderabschnitt. Dadurch wird die Distanz zwischen aufeinanderfolgenden, einzelnen Bauteilen während des Transportes aufgrund der unterschiedlichen Fördergeschwindigkeiten in den einzelnen Förderbereichen beim Übergang von einem zum nächsten Förderbereich vergrößert und während der Förderung eine Vereinzelung bewirkt.

Vorteilhaft ist es aber auch, daß die Bauteile im Förderabschnitt und bzw. oder im Förderweg in Förderrichtung mit einer gerichteten Vibrationskraft beaufschlagt werden, wobei die Amplitude in Förderrichtung im Förderabschnitt bzw. im Vereinzelungs- und Ausrichtungsbereich der Bauteile nur einen Teil der Amplitude im Förderweg und bzw. oder im Entnahmebereich beträgt, da dadurch unabhängig von dem Gewicht der einzelnen Bauteile und der Leistung der Vibrationsantriebe die Fortbewegungsgeschwindigkeit den einzelnen Bauteile angepaßt werden kann.

Nach einer anderen Ausführungsvariante ist vorgesehen, daß ein Überwachungsbereich eines Überwachungsorganes im Entnahmebereich angeordnet ist und beim Eintreten des Bauteiles in den Überwachungsbereich des Überwachungsorganes die Förderung im Förderweg unterbrochen wird, wodurch in einfacher Weise sichergestellt wird, daß sich über den im Entnahmebereich eintreffenden, vereinzelten Bauteil kein weiterer Bauteil überschieben kann und dieser vereinzelte Bauteil im Überwachungsbereich der Überwachungsorgane zu liegen kommt, wodurch der Bereich, in welchen der Teil durch eine Handhabungsvorrichtung erfaßt und zu einer Ablagestelle transportiert werden kann, festgelegt werden kann.

Die Erfindung umfaßt weiters aber auch eine Vorrichtung zum Vorrichtung zum Vereinzeln, Zuführen und Entnehmen von Bauteilen zur Durchführung des Verfahrens mit einem Aufnahmebehälter für eine ungeordnete Menge von Bauteilen mit einer Fördervorrichtung, mit einem Förderabschnitt, mit Ausricht -und Vereinzelungsvorrichtungen sowie einen diesem zugeordneten Förderantrieb und mit einem diesen nachgeordneten Förderweg mit einen diesem zugeordneten weiteren Förderantrieb, mit einer ersten Überwachungsvorrichtung für die Bauteile im Entnahmebereich und einer dem Entnahmebereich zugeordneten Handhabungsvorrichtung mit einem Greifer der in der dem Entnahmebereich zugeordneten Aufnahmeposition einen Aufnahmebereich aufweist, der sich zumindest über die parallel zum Förderweg erstreckende Projektionsfläche des Bauteiles erstreckt.

Diese Vorrichtung zur Durchführung des zuvor beschriebenen Verfahrens ist dadurch gekennzeichnet, daß zwischen dem Förderabschnitt und dem Förderweg eine einer Förderbahn der Bauteile zugeordnete zweite Überwachungsvorrichtung mit Überwachungsorganen angeordnet ist und der Förderantrieb des Förderabschnittes über eine Schaltvorrichtung mit der zweiten Überwachungsvorrichtung verbunden ist und bei Beaufschlagung der zweiten Überwachungsvorrichtung durch einen Bauteil die Schaltvorrichtung zur Unterbrechung der Tätigkeit des Förderantriebes des Förderabschnittes und gegebenenfalls zur Aktivierung eines Stopgliedes für die Bauteile zwischen Förderweg und Förderabschnitt beaufschlagt ist und daß bei Beaufschlagung der ersten Überwachungsvorrichtung im Entnahmebereich durch einen Bauteil die Schaltvorrichtung zur Unterbrechung der Tätigkeit des Förderantriebes des Förderweges beaufschlagt ist. Durch die Zuordnung der Überwachungsorgane zu der Schaltvorrichtung und deren Verbindung mit den Förderantrieben der einzelnen Förderbereiche wird ein exaktes Stillsetzen der Förderung in diesen Förderbereichen gewährleistet, wodurch insbesondere im Entnahmebereich ein Positionieren der einzelnen Bauteile mit relativ hoher Genauigkeit möglich ist. Wird nun bei der Handhabungsvorrichtung ein Greifer eingesetzt, der es ermöglicht, in diesem Bereich liegende Bauteile zu erfassen, so ist eine Positionierung durch Anschläge oder Schieber meist nicht erforderlich. So ist es beispielsweise vorteilhaft möglich, Sauggreifer zu verwenden, deren Greiffläche nur einen Teil der Projektionsfläche des Montageteiles umfassen. Mit einem derart ausgebildeten Greifer können, wenn dieser in etwa auf die Mitte des Entnahmebereichs zentriert ist, auch Teile, die außermittig liegen, noch einwandfrei erfaßt und abgehoben werden. Durch die Unterbrechung der Förderbewegung immer dann, wenn ein vereinzelter Montageteil den Entnahmebereich erreicht hat, ist es überdies möglich, plättchenförmige Bauteile auch ohne eine Führungsleiste im Bereich der Oberseite der Bauteile zu führen. Damit ist es möglich, die Bauteile senkrecht zur Fortbewegungsrichtung bzw. zu ihrer Auflagefläche von der Führungsbahn abzuheben.

Es ist aber auch eine andere Ausführungsform einer Vorrichtung zur Durchführung des Verfahrens möglich, die zum Vereinzeln, Zuführen und Entnehmen von Bauteilen zur Durchführung des Verfahrens mit einem Aufnahmebehälter für eine ungeordnete Menge von Bauteilen mit einer Fördervorrichtung, mit einem Förderabschnitt, mit Ausricht- und Vereinzelungsvorrichtungen sowie einen diesem zugeordneten Förderantrieb und mit einem diesen nachgeordneten Förderweg mit einen diesem zugeordneten weiteren Förderantrieb, mit einer ersten Überwachungsvorrichtung für die Bauteile im Entnahmebereich und einer dem Entnahmebereich zugeordneten Handhabungsvorrichtung mit einem Greifer der in der dem Entnahmebereich zugeordneten Aufnahmeposition einen Aufnahmebereich aufweist, der sich zumindest über die parallel zum Förderweg erstreckende Projektionsfläche des Bauteiles erstreckt.

Diese Vorrichtung ist dadurch gekennzeichnet, daß zwischen dem Förderabschnitt und dem Förderweg eine einer Förderbahn der Bauteile zugeordnete zweite Überwachungsvorrichtung mit Überwachungsorganen angeordnet ist und der Förderantrieb des Förderabschnittes über eine Schaltvorrichtung mit der zweiten Überwachungsvorrichtung, die mit einer Zählvorrichtung gekuppelt ist, verbunden ist und bei Beaufschlagung der zweiten Überwachungsvorrichtung durch eine vorbestimmbare Anzahl der Bauteil die Schaltvorrichtung zur Unterbrechung der Tätigkeit des Förderantriebes des Förderabschnittes und gegebenenfalls zur Aktivierung eines Stopgliedes für die Bauteile zwischen Förderweg und Förderabschnitt beaufschlagt ist und daß jeweils bei Beaufschlagung der ersten Überwachungsvorrichtung im Entnahmebereich durch einen Bauteil die Schaltvorrichtung zur Unterbrechung der Tätigkeit des Förderantriebes des Förderweges beaufschlagt ist und nach der Entnahme des Bauteiles der Förderantrieb wieder aktiviert wird. Durch die Überwachung der Anzahl der vom Förderabschnitt auf den Förderweg übertretenden Bauteile in Verbindung mit den unterschiedlichen Fördergeschwindigkeiten in diesen Bereichen kann auch bei einem derartigen Verfahrensablauf durch die entsprechend ausgestaltete Vorrichtung sichergestellt werden, daß einander unmittelbar aufeinanderfolgende Bauteile sich nicht übereinander schieben können. Dadurch ist es auch bei einem derartigen Verfahren, bei welchem mehrere Bauteile jeweils den Übergang zwischen Förderabschnitt und Förderweg basieren können möglich, im Entnahmebereich ohne zusätzliche mechanische Maßnahmen immer ein vereinzeltes Bauteil zu positionieren.

Es ist aber auch möglich, daß dem Entnahmebereich ein Überwachungsbereich der Überwachungsvorrichtung zugeordnet ist und bei Eintreten eines Bauteiles in den Überwachungsbereich über die Schaltvorrichtung der Förderantrieb des Förderweges stillgesetzt ist, wodurch ein Teil des Förderweges gleichzeitig als Entnahmebereich eingesetzt werden kann.

Zum besseren Verständnis der Erfindung wird diese im folgenden anhand der in der Zeichnung dargestellten Ausführungsbeispiele näher erläutert.
Es zeigen

Fig. 1 eine erfindungsgemäße Vorrichtung zum Vereinzeln von Bauteilen in Seitenansicht und schematischer Darstellung;

Fig. 2 einen Förderweg im Entnahmebereich in Stirnansicht, teilweise geschnitten und in vereinfachter schematischer Darstellung;

Fig. 3 eine Ausführungsvariante einer erfindungsgemäßen Vorrichtung zum Vereinzeln von Bauteilen in Draufsicht und vereinfachter schematischer Darstellung.

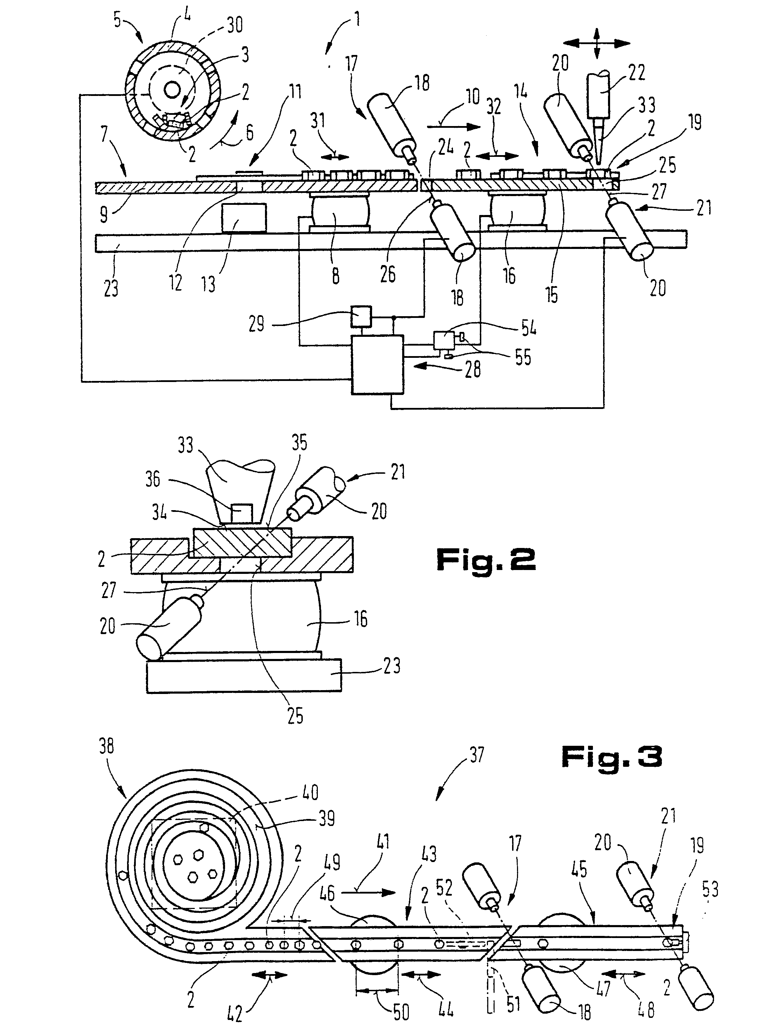

In Fig. 1 ist eine Vorrichtung 1 zum Ausrichten und Vereinzeln von Bauteilen 2 dargestellt. Eine ungeordnete Menge 3 von Bauteilen 2 ist in einem Aufnahmebehälter 4 einer Fördervorrichtung 5 angeordnet. Der Aufnahmebehälter 4 ist beispielsweise durch eine um eine horizontale Achse rotierende Trommel gebildet, wobei im Zuge der stetigen Rotation in Richtung eines Pfeiles 6 durch Ausgänge im Trommelmantel Teilmengen dieser ungeordneten Menge 3 der Bauteile 2 auf einen nachgeordneten insbesondere unterhalb des Aufnahmebehälters 4 vorgesehenen Förderabschnitt 7 fallen. Die Trommel kann dabei bevorzugt entsprechend der DE-PS-2 707 856 des gleichen Anmelders ausgebildet und entsprechend dem dort beschriebenen Verfahren betrieben werden. Der Förderabschnitt 7 umfaßt einen Förderantrieb 8, der eine Schikanenplatte 9 derart in Schwingungen versetzt, daß die Resultierende eine Förderbewegung in Förderrichtung - Pfeil 10 - ergibt. Auf der Schikanenplatte 9 sind Ausrichtvorrichtungen 11 angeordnet, die übereinanderliegende oder nicht mit ihren Flachseiten auf der Schikanenplatte 9 aufliegende Bauteile 2 durch eine Auswurföffnung 12 in einen Behälter 13 abwerfen, von welchem sie wieder den Innenraum des Aufnahmebehälters 4 zugeführt werden. Dem Förderabschnitt 7 ist in Förderrichtung - Pfeil 10 - ein Förderweg 14 nachgeordnet, dessen Schikanenplatte 15 über einen weiteren Förderantrieb 16 beispielsweise einen Vibrationsförderer mit Schwingungen beaufschlagt wird, deren Resultierende eine Vorschubbewegung in Förderrichtung - Pfeil 10 - bewirken. Zwischen dem Förderabschnitt 7 und dem Förderweg 14 ist eine Überwachungsvorrichtung 17 mit Überwachungsorganen 18, die beispielsweise durch einen Lichtsender und einen Lichtempfänger oder entsprechend angeordnete, diesen zugeordnete Lichtleiter gebildet sein können, vorgesehen. Des weiteren sind in einem von der Überwachungsvorrichtung 17 distanzierten Entnahmebereich 19 Überwachungsorgane 20 einer Überwachungsvorrichtung 21 und eine Handhabungsvorrichtung 22 angeordnet. Die Förderantriebe 8, 16 des Förderabschnitt 7 und des Förderweges 14 können auf einer gemeinsamen Grundplatte 23 oder einem Maschinentisch oder dgl. angeordnet sein.

Wie besser aus Fig. 2 ersichtlich, sind im Bereich der Überwachungsvorrichtungen 17 und 21 in den Schikanenplatten 9, 15 Öffnungen 24, 25 angeordnet, durch welche der zwischen den beiden Überwachungsorganen 18 bzw. 20 sich erstreckende Strahl 26, 27, wie z. B. ein Lichtstrahl im infraroten Bereich oder Wärmestrahlung oder dgl., hindurchtreten kann. Selbstverständlich ist es auch möglich, beide Überwachungsorgane unter einem bestimmten Winkel zueinander unterhalb oder oberhalb der Schikanenplatte 9 bzw. 15 anzuordnen, um so jeweils die reflektierte Lichtmenge festzustellen. Durch den Helligkeitsunterschied bei Durchtritt des Bauteiles 2 durch den Strahl 26, 27 kann das Passieren eines Bauteiles 2 einfach überwacht werden.

Die Überwachungsorgane 18, 20 sind über Leitungen mit einer Schaltvorrichtung 28 zusammengeschaltet, der eine Zählvorrichtung 29 zugeordnet ist. An der Zählvorrichtung 29 liegt insbesondere das Überwachungsorgan 18 der Überwachungsvorrichtung 17 an, um feststellen zu können, wieviel vereinzelte Bauteile 2 den Übergangsbereich zwischen dem Förderabschnitt 7 und dem Förderweg 14 passieren. Je nach der in der Schaltvorrichtung 28 getroffenen Einstellung, wird dann nach Passieren eines einzelnen Bauteiles 2 bzw. nach einer vorbestimmten Mehrzahl von Bauteilen 2 der Förderantrieb 8 sowie ein Förderantrieb 30 der Fördervorrichtung 5 stillgesetzt, um einen Teilestau im Bereich des Förderabschnittes 7 zu vermeiden. Wird die Tätigkeit des Förderantriebes 8 und 30 erst unterbrochen, nachdem eine vorbestimmte Anzahl von Bauteilen 2 die Überwachungsvorrichtung 17 passiert hat, so wird dadurch, daß der Förderantrieb 16 eine gegenüber dem Förderantrieb 8 höhere Fördergeschwindigkeit der Bauteile 2 bewirkt - wie schematisch durch die Pfeile 31 und 32 angedeutet - eine Vergrößerung des Abstandes zwischen den aufeinander folgenden Bauteilen 2 erreicht. Dies deshalb, da in der Zeiteinheit in der durch den Förderantrieb 8 ein weiterer Montageteil in den Bereich des Förderweges 14 verbracht wird, der sich bereits im Bereich des Förderweges 14 befindliche Bauteil 2 aufgrund der höheren Fördergeschwindigkeit um eine größere Distanz von der Übergabestelle wegbewegt wurde.

Mittels der weiteren Überwachungsvorrichtung 21 ist es nun im Entnahmebereich 19 möglich, nach Eintreffen des ersten Bauteiles 2, der durch Unterbrechen des Strahles 27 zwischen den Überwachungsorganen 20 festgestellt wird, auch die Tätigkeit des Förderantriebes 16 jeweils über die Schaltvorrichtung 28 sofort zu unterbrechen, wodurch die nachfolgenden Bauteile 2 angehalten werden und stillstehen. Nun kann, wie insbesondere auch aus Fig. 2 besser ersichtlich, durch das Absenken beispielsweise eines Sauggreifers 33 der Handhabungsvorrichtung 22 mit diesem der Bauteil 2 erfaßt und in eine gewünschte Ablageposition verbracht werden. Selbstverständlich ist dabei zu berücksichtigen, daß die Position des im Entnahmebereich 19 befindlichen Bauteiles 2 nicht immer völlig exakt eingehalten werden kann, d. h. daß die einzelnen Bauteile 2 in Abhängigkeit von dem jeweiligen Abschaltvorgang der Schaltvorrichtung 28, unter Bezug auf die jeweilige Stellung des Förderantriebes 16 nicht hundertprozentig exakt eingehalten werden kann. Beträgt eine Oberfläche 34 eines Sauggreifers 33 jedoch nur einen Teil einer Oberfläche 35 eines Bauteiles 2, so ist es theoretisch möglich, bei einer unterschiedlichen Lage von plus minus ca. 30 bis 40 % des Durchmessers oder der in Fortbewegungsrichtung - Pfeil 10 - vorhandenen Länge des Bauteiles 2 ein einwandfreies Erfassen des Bauteiles 2 mit dem Sauggreifer 33 zu ermöglichen. Es ist hierbei nur darauf zu achten, daß der Unterdruck, der zwischen dem Sauggreifer 33 und dem Bauteil 2 aufgebracht wird, ausreicht, um auch bei einem exzentrischen Angriff des Sauggreifers 33 am Bauteil 2 diesen zuverlässig anheben zu können.

Unabhängig davon ist es selbstverständlich im Rahmen der Erfindung auch möglich, für den Bauteil 2 im Entnahmebereich 19 einen Anschlag zum exakten Positionieren anzuordnen. In jedem Fall, also unabhängig davon, ob nun ein Anschlag für die Bauteile 2 im Entnahmebereich 19 vorgesehen ist oder nicht, wird durch die unterschiedlichen Fördergeschwindigkeiten im Bereich des Förderabschnittes 7 und des Förderweges 14 sowie durch ein entsprechendes Aus- und Einschalten der Förderantriebe 8, 16 vermieden, daß sich aufeinanderfolgende Bauteile 2 im Zuge des Förderweges 14 oder gegebenenfalls bereits im Zuge des Förderabschnittes 7 übereinanderschieben. Dies ist insbesondere bei der vereinzelten Zuführung von Bauteilen 2 wichtig, deren Dicke im Vergleich zum Durchmesser oder der Länge und der Breite nur einen Bruchteil beträgt. Es sei hiezu festgehalten, daß das Verhältnis zwischen Länge und Dicke der in Fig. 1 gezeigten Bauteile 2 zum besseren Verständnis und der besseren Übersichtigkeit wegen stark verzerrt dargestellt ist. Üblicherweise treten diese Probleme beim Zuführen von Chips in der Elektronikindustrie auf, deren Dicke im Bereich von einigen Zehntel mm liegt und deren Oberfläche einige mm$^2$ beträgt. Dazu kommt noch, daß diese Chips unterschiedliche Querschnittsformen, beispielsweise sechseckig, achteckig oder rund aufweisen können. Weiters ist es günstig, wenn die Führung der einzelnen Bauteile 2 von oben her, also von jener Seite von welcher der Sauggreifer 33 zur Anlage kommt, wegfallen kann, da damit das Auftreten einer erhöhten Reibung bei den insbesondere extrem leichten Teilen und ein Abbremsen der Bauteile 2 bei der Förderung entlang des Förderabschnittes 7 bzw. Förderweges 14 und somit ein Auflaufen der nachfolgenden Bauteile 2 und ein Verkeilen derselben verhindert wird.

Ist eine exakte Positionierung und Aufnahme des Chips relativ zum Sauggreifer 33 notwendig, ist es auch möglich in diesem oder diesem zugeordnet ein Abtastorgan 36 anzuordnen, um die Lage des Bauteiles 2 gegenüber dem Sauggreifer 33 zu überwachen und den Sauggreifer 33 auf das Zentrum des Bauteiles 2 zentrieren zu können.

Für die Schaltvorrichtung 28 können übliche Schaltungsanordnungen, wie sie aus der Steuer- und Regel technik bekannt sind, verwendet werden, um die einzelnen Förderantriebe 8, 16 bzw. 30 in und außer Tatigkeit zu setzen. Es ist dabei unerheblich, ob die Steuerung mittels digitaler Bauelemente einem Elektronenrechner oder mittels Relais oder einer analogen Schaltung erfolgt.

In Fig. 3 ist eine andere Ausführungsform einer Vorrichtung 37 zum Ausrichten und Vereinzeln von Bauteilen 2, z. B. Chips, gezeigt. Diese Vorrichtung umfaßt einen Aufnahmebehälter 38, der als Vibratortopf mit einer schneckenförmig ansteigenden Förderbahn 39 ausgebildet ist. Der Vibratortopf wird mit einer Fördervorrichtung 40 in Schwingungen versetzt, um die Bauteile 2 in Förderrichtung - Pfeil 41 - mit einer ersten Fördergeschwindigkeit 42 in Teilgruppen aus dem Aufnahmebehälter 38 entlang der Förderbahn 39 hochzufördern. Dies erfolgt dadurch, daß der Aufnahmebehälter 38 mit einer Vibrationskraft beaufschlagt wird, deren Amplitude in Förderrichtung - Pfeil 41 - der gewünschten Fördergeschwindigkeit entspricht. In einem an den Aufnahmebehälter 38 anschließenden Förderabschnitt 43 werden die Teile mit einer höheren Fördergeschwindigkeit 44 - schematisch durch einen längeren Pfeil angedeutet - in Richtung eines Förderweges 45 befördert. Zur Förderung der Bauteile 2 im Förderabschnitt 43 bzw. im Förderweg 45 sind diesen jeweils Förderantriebe 46, 47 zugeordnet. Diese sind durch bekannte Schwingmagnete gebildet, die eine der gewünschten Fördergeschwindigkeit entsprechende Schwingungsamplitude in Förderrichtung 41 aufweisen.

Eine durch den Förderantrieb 47 erzeugte Fördergeschwindigkeit 48 ist, wie schematisch durch die Länge des Pfeil es angedeutet, größer als die Fördergeschwindigkeit 44.

Wie nun anhand der unterschiedlichen Abstände der schematisch dargestellten Bauteile 2 in den unterschiedlichen Förderbereichen zu erkennen ist, erfolgt eine Vergrößerung einer Distanz 49 zwischen zwei einander in Förderrichtung unmittelbar benachbarten Bauteilen 2 im Bereich der Förderbahn 39 auf eine Distanz 50 im Bereich des Förderabschnittes 43 durch die unterschiedliche Fördergeschwindigkeit 42 bzw. 44. Dadurch kommt es zu einer "Spreizung" zwischen den einzelnen Bauteilen 2 und es wird ein Auflaufen und ein Überschieben von einander unmittelbar aufeinander folgenden Bauteilen 2 zuverlässig vermieden. Überschreitet nun ein Bauteil 2, wie in Fig. 3 gezeigt, den Übergangsbereich zwischen dem Förderabschnitt 43 und dem Förderweg 45, so wird dies mit der Überwachungsvorrichtung 17 festgestellt, die, wie bereits anhand der Darstellung in Fig. 1 näher erläutert, die Fördervorrichtung 40 und den Förderantrieb 46 bevorzugt sofort stillsetzt. Dadurch werden im Bereich der Förderbahn 39 und des Förderabschnittes 43 die Abstände bzw. Distanzen 49 bzw. 50 zwischen den einander unmittelbar aufeinander folgenden Bauteilen 2 beibehalten und lediglich der vereinzelte Bauteil 2 im Bereich des Förderweges 45 wird nun mit der höheren Fördergeschwindigkeit 48 in einen Entnahmebereich 19 verbracht. Erreicht der Bauteil, wie mit strichlierten Linien angedeutet, die durch die Überwachungsvorrichtung 21 festgelegte Entnahmeposition im Entnahmebereich 19, so wird, wie ebenfalls bereits anhand der Darstellung in Fig. 1 näher erläutert, der Förderantrieb 47 ebenfalls stillgesetzt. Damit kann der einzelne Bauteil 2 nunmehr mit einer Handhabungsvorrichtung 22 erfaßt und zur Montage weitertransportiert werden.

Es ist aber auch möglich, die Anzahl der Bauteile 2, die den Bereich der Überwachungsvorrichtung 17 und somit den Übergangsbereich vom Förderabschnitt 43 auf den Förderweg 45 passieren, zu zählen und jeweils nach dem Passieren einer vorbestimmten Anzahl von Bauteilen 2, den Förderantrieb 46 bzw. die Fördervorrichtung 40 stillzusetzen. Durch die höhere Fördergeschwindigkeit 48 im Bereich des Förderweges 45 nimmt die Distanz zwischen zwei in Förderrichtung unmittelbar aufeinander folgenden Bauteilen 2 zu. Wird der Förderantrieb 47 des Förderweges 45 bei Eintreffen eines Bauteiles 2 im Entnahmebereich 19 stillgesetzt, so kann auch dann, wenn sich gleichzeitig mehrere Bauteile 2 im Bereich des Förderweges 45 befinden, zuverlässig ein Übereinanderschieben von sehr flachen Bauteilen 2 verhindert werden. Dieses Übereinanderschieben der Bauteile wird nämlich üblicherweise dadurch begünstigt, daß die meisten Vibrationsförderer auch eine senkrecht zur Förderrichtung wirkende Amplitude aufweisen, die zu einem "Hüpfen" der Teile, also zu einem Abheben der Bauteile 2 von der Unterlage des Förderabschnittes bzw. Förderweges führen. Sind nun die Teile sehr dünn, reicht dies aus, um durch diese Vertikalbewegung der Bauteile 2 das Übereinanderschieben aufeinander folgender Bauteile und damit das Verstopfen des Förderweges zu begünstigen.

Wird jedoch in Art eines Stop-and-Go-Betriebes jeweils beim Vorhandensein einer ausreichenden Anzahl von Bauteilen im Bereich des Förderweges 45 bzw. im Entnahmebereich 19 die Förderung stillgesetzt, so kann dieser nachteilige Effekt nicht eintreten.

Nur der Vollständigkeit halber sei darauf hingewiesen, daß es natürlich auch möglich ist, die Förderung der Bauteile 2 im Bereich der Überwachungsvorrichtung 17 durch einen in den Förderweg einschiebbaren, als Stopglied 51 dienenden Schieber zu unterbrechen. Dieser kann aus der in strichpunktierten Linien, seitlich neben dem Förderabschnitt bzw. Förderweg befindlichen Stellung in eine in diesen befindliche Stopstellung verbracht werden. Falls dabei der Förderantrieb 46 nicht gleichzeitig mit dem Unterbrechen der Förderung durch das Stopglied 51 stillgesetzt wird, ist es vorteilhaft, eine die Bewegung der Bauteile 2 senkrecht zu ihrer Auflagefläche angeordnete Führungsleiste 52 vorzusehen, die in Fig. 3 in dem der Überwachungsvorrichtung 17 zugewandten Endbereich mit strichlierten Linien angedeutet sind. In diesem Fall kommt es dann in dem durch das Stopglied 51 gebildeten Rückstau zu einem unmittelbaren Aneinanderstoßen der einzelnen Bauteile 2.

Wie bereits in Fig. 1 erläutert, sind im Bereich der Überwachungsvorrichtungen entsprechende Öffnungen im Förderabschnitt bzw. Förderweg vorgesehen, um einen Durchtritt der Überwachungsstrahlen zu ermöglichen. Es ist aber auch möglich, zur Überwachung des Eintreffens bzw. Passierens von Bauteilen 2 Auflicht-Lichtschranken zu verwenden oder die zur Überwachung dienenden Lichtstrahlen durch die Spalte zwischen Förderweg und Förderabschnitt bzw. Förderabschnitt und Förderbahn hindurchgehen zu lassen. Die in den Darstellungen gezeigten Distanzen zwischen diesen einzelnen Förderbereichen sind der besseren Übersichtlichkeit der Zeichnung wegen, unverhältnismäßig groß dargestellt. Es ist hierbei auch von Vorteil, wenn die einander zugewandten Stirnseiten des Förderabschnittes und Förderweges schräg zur Förderrichtung verlaufen, da damit ein Hineinkippen von Teilen und ein Verklemmen von Teilen beim Übergang von einem Förderbereich auf den anderen zuverlässig verhindert werden kann.

Des weiteren ist es auch möglich, im Entnahmebereich 19 - wie in Fig. 3 schematisch angedeutet - einen Anschlag 53 anzuordnen, um eine gleichbleibend exakte Positionierung zu ermöglichen. Vorteilhaft ist es, wenn der Anschlag 53 aus einer in vollen Linien gezeichneten, in der Förderbahn der Bauteile 2 befindlichen Stellung in eine Ruhestellung verstellbar ist. In der Ruhestellung des Anschlages 53 können dann z. B. schadhafte Bauteile 2 den Entnahmebereich 19 ungehindert passieren.

Im Rahmen der Erfindung ist es natürlich auch möglich, den Förderantrieb 16 für den Förderweg 14 nach dem Durchtritt eines Bauteiles 2 durch den Strahl 27 im Sinne einer Verringerung der Fördergeschwindigkeit zu beaufschlagen. Es ist möglich, die Fördergeschwindigkeit entweder progressiv oder linear zu verändern, um dadurch ein Anhalten des Bauteiles 2 an einer vorher definierten Stelle des Förderweges 14 zu erreichen. Die Zeitdauer, über welche sich die Verzögerungsphase erstreckt bzw. der Verzögerungswert kann mit Einstellorganen 55 auf der Verzögerungsvorrichtung 54 eingestellt werden. Selbstverständlich ist es möglich, bei dieser Ausführungsform den Förderweg 14 im Anschluß an die Überwachungsorgane 20 zu verlängern, sodaß ein ausreichend langer Auslauf für die zum Stillstand zu bringenden Bauteile 20 zur Verfügung steht. In diesem Zusammenhang ist es auch möglich, die Verzögerungsvorrichtung 54 so auszubilden, daß nach der Entnahme des Bauteiles 2 aus dem Entnahmebereich 19 die volle Fördergeschwindigkeit nicht schlagartig einsetzt, sondern die Fördergeschwindigkeit kontinuierlich auf den vorprogrammierten Soll-Wert ansteigt und somit in Äquivalenz zu dem Sanft-Auslauf während der Verzögerungsphase ein Sanft-Anlauf nach dem Stillstand des Förderantriebes 16 erzielt wird.

Eine gleichartige Ausbildung des Förderantriebes ist auch bei der Ausführungsform nach Fig. 3 möglich.

**Bezugszeichenaufstellung**

1 Vorrichtung
2 Bauteil
3 Menge
4 Aufnahmebehälter
5 Fördervorrichtung

6 Pfeil
7 Förderabschnitt
8 Förderantrieb
9 Schikanenplatte
10 Pfeil (Förderrichtung)

11 Ausrichtvorrichtung
12 Auswurföffnung
13 Behälter
14 Förderweg
15 Schikanenplatte

16 Förderantrieb
17 Überwachungsvorrichtung
18 Überwachungsorgan
19 Entnahmebereich
20 Überwachungsorgan

21 Überwachungsvorrichtung
22 Handhabungsvorrichtung
23 Grundplatte
24 Öffnung
25 Öffnung

26 Strahl
27 Strahl
28 Schaltvorrichtung
29 Zählvorrichtung
30 Förderantrieb

31 Pfeil
32 Pfeil
33 Sauggreifer
34 Oberfläche
35 Oberfläche

36 Abtastorgan
37 Vorrichtung
38 Aufnahmebehälter
39 Förderbahn
40 Fördervorrichtung

41 Pfeil

42 Fördergeschwindigkeit
43 Förderabschnitt
44 Fördergeschwindigkeit
45 Förderweg

46 Förderantrieb
47 Förderantrieb
48 Fördergeschwindigkeit
49 Distanz
50 Distanz

51 Stopglied
52 Führungsleiste
53 Anschlag
54 Verzögerungsvorrichtung
55 Einstellorgan

**Patentansprüche**

1. Verfahren zum Vereinzeln, Zuführen und Entnehmen von Bauteilen (2), insbesondere elektronischen Schaltungsteilen, die aus einer ungeordneten Menge von Bauteilen (2) entnommen, vereinzelt und in einer vorbestimmten Lage einem Entnahmebereich (19) zugeführt werden, worauf sie erfaßt und zu einer Ablagestelle verbracht werden, bei dem aus der ungeordneten Menge von Bauteilen (2) Teilgruppen entnommen und während der Fortbewegung mit einer ersten Fördergeschwindigkeit in einem Förderabschnitt (7, 43) vereinzelt und ausgerichtet werden, worauf die Bauteile (2) über einen nachgeordneten Förderweg (14, 45) in den Entnahmebereich (19) verbracht werden, dadurch gekennzeichnet, daß ein Übergang jedes einzelnen Bauteiles (2) vom Förderabschnitt (7, 43) auf den Förderweg (14, 45) festgestellt und daran anschließend die Förderung zwischen dem Förderabschnitt (7, 43) und dem Förderweg (14, 45) oder die Entnahme von Teilmengen sowie die Förderung im Förderabschnitt (7, 43) stillgesetzt wird, worauf nach dem Eintreffen eines einzelnen Bauteiles (2) im Entnahmebereich (19) die Förderung im Förderweg (14, 45) unterbrochen wird.

2. Verfahren zum Vereinzeln, Zuführen und Entnehmen von Bauteilen (2), insbesondere elektronischen Schaltungsteilen, die aus einer ungeordneten Menge von Bauteilen (2) entnommen, vereinzelt und in einer vorbestimmten Lage einem Entnahmebereich (19) zugeführt werden, worauf sie erfaßt und zu einer Ablagestelle verbracht werden, bei dem aus der ungeordneten Menge von Bauteilen (2) Teilgruppen entnommen und während der Fortbewegung mit einer ersten Fördergeschwindigkeit in einem Förderabschnitt (7, 43) vereinzelt und ausgerichtet werden, worauf die Bauteile (2) über einen nachgeordneten Förderweg (14, 45) mit einer höheren Fördergeschwindigkeit als im Förderabschnitt (7, 43) in den Entnahmebereich (19) verbracht werden, dadurch gekennzeichnet, daß eine vorbestimmbare Anzahl von Bauteilen (2) vom Förderabschnitt (7, 43) auf den Förderweg (14, 45) übergeht und deren Anzahl ermittelt wird und daran anschließend die Förderung zwischen dem Förderabschnitt (7, 43) und dem Förderweg (14, 45) oder die Entnahme von Teilmengen sowie die Förderung im Förderabschnitt (7, 43) so lange stillgesetzt wird, bis die vor dem Unterbrechen der Förderung im Förderabschnitt (7, 43) auf den Förderweg (14, 45) übergegangenen Bauteile (2) aufeinanderfolgend und einzeln dem Entnahmebereich (19) zugeführt und von diesem entnommen wurden, wobei jeweils nach dem Eintreffen eines einzelnen Bauteiles (2) im Entnahmebereich (19) auch die Förderung im Förderweg (14, 45) unterbrochen wird und nach der Entnahme dieses Bauteiles (2) wieder aufgenommen wird.

3. Verfahren nach Anspruch 1 oder 2, dadurch gekennzeichnet, daß die Teilgruppen durch Förderung mittels Vibration aus der ungeordneten Menge von Bauteilen entnommen werden und daß die Fördergeschwindigkeit der Teilgruppen geringer ist als die erste Fördergeschwindigkeit im Förderabschnitt.

4. Verfahren nach Anspruch 1, 2 oder 3, dadurch gekennzeichnet, daß die Bauteile im Förderabschnitt und bzw. oder im Förderweg in Förderrichtung mit einer gerichteten Vibrationskraft beaufschlagt werden, wobei die Amplitude in Förderrichtung im Förderabschnitt bzw. im Vereinzelungs- und Ausrichtungsbereich der Bauteile nur einen Teil der Amplitude im Förderweg und bzw. oder im Entnahmebereich beträgt.

5. Verfahren nach einem der Ansprüche 1 bis 4, dadurch gekennzeichnet, daß ein Überwachungsbereich eines Überwachungsorganes im Entnahmebereich angeordnet ist und beim Eintreten des Bauteiles in den Überwachungsbereich des Überwachungsorganes die Förderung im Förderweg unterbrochen wird.

6. Vorrichtung (1) zum Vereinzeln, Zuführen und Entnehmen von Bauteilen (2) zur Durchführung des Verfahrens nach Anspruch 1 oder einem der Ansprüche 3 bis 5 in Kombination mit dem Anspruch 1 mit einem Aufnahmebehälter (4, 38) für eine ungeordnete Menge von Bauteilen (2) mit einer Fördervorrichtung (5, 40), mit einem Förderabschnitt (7, 43), mit Ausricht- und Vereinzelungsvorrichtungen (11) so wie einen diesem zugeordneten Förderantrieb (8, 46) und mit einem diesen nachgeordneten Förderweg (14, 45) mit einen diesem zugeordneten weiteren Förderantrieb (47), mit einer ersten Überwachungsvorrichtung (21) für die Bauteile (2) im Entnahmebereich (19) und einer dem Entnahmebereich (19) zugeordneten Handhabungsvorrichtung (22) mit einem Greifer der in der dem Entnahmebereich (19) zugeordneten Aufnahmeposition einen Aufnahmebereich aufweist, der sich zumindest über die parallel zum Förderweg erstreckende Projektionsfläche des Bauteiles (2) erstreckt, dadurch gekennzeichnet, daß zwischen dem Förderabschnitt (7, 43) und dem Förderweg (14, 45) eine einer Förderbahn der Bauteile (2) zugeordnete, zweite Überwachungsvorrichtung (17) mit Überwachungsorganen (18) angeordnet ist und der Förderantrieb (8, 46) des Förderabschnittes (7, 43) über eine Schaltvorrichtung (28) mit der zweiten Überwachungsvorrichtung (17) verbunden ist und bei Beaufschlagung der zweiten Überwachungsvorrichtung (17) durch einen Bauteil (2) die Schaltvorrichtung (28) zur Unterbrechung der Tätigkeit des Förderantriebes (8, 46) des Förderabschnittes (7, 43) und gegebenenfalls zur Aktivierung eines Stopgliedes (51) für die Bauteile (2) zwischen Förderweg (14, 45) und Förderabschnitt (7, 43) beaufschlagt ist und daß bei Beaufschlagung der ersten Überwachungsvorrichtung (21) im Entnahmebereich (19) durch einen Bauteil (2) die Schaltvorrichtung (28) zur Unterbrechung der Tätigkeit des Förderantriebes (16, 47) des Förderweges (14, 45) beaufschlagt ist.

7. Vorrichtung (1) zum Vereinzeln, Zuführen und Entnehmen von Bauteilen (2) zur Durchführung des Verfahrens nach Anspruch 2 oder einem der Ansprüche 3 bis 5 in Kombination mit dem Anspruch 2 mit einem Aufnahmebehälter (4, 38) für eine ungeordnete Menge von Bauteilen (2) mit einer Fördervorrichtung (5, 40), mit einem Förderabschnitt (7, 43), mit Ausricht- und Vereinzelungsvorrichtungen (11) so wie einen diesem zugeordneten Förderantrieb (8, 46) und mit einem diesen nachgeordneten Förderweg (14, 45) mit einen diesem zugeordneten weiteren Förderantrieb (47), mit einer ersten Überwachungsvorrichtung (21) für die Bauteile (2) im Entnahmebereich (19) und einer dem Entnahmebereich (19) zugeordneten Handhabungsvorrichtung (22) mit einem Greifer der in der dem Entnahmebereich (19) zugeordneten Aufnahmeposition einen Aufnahmebereich aufweist, der sich zumindest über die parallel zum Förderweg erstreckende Projektionsfläche des Bauteiles (2) erstreckt, dadurch gekennzeichnet, daß zwischen dem Förderabschnitt (7, 43) und dem Förderweg (14, 45) einer Förderbahn der Bauteile (2) zugeordnete zweite Überwachungsvorrichtung (17) mit Überwachungsorganen (18) angeordnet ist und der Förderantrieb (8, 46) des Förderabschnittes (7, 43) über eine Schaltvorrichtung (28) mit der zweiten Überwachungsvorrichtung (17), die mit einer Zählvorrichtung (29) gekuppelt ist, verbunden ist und bei Beaufschlagung der zweiten Überwachungsvorrichtung (17) durch eine vorbestimmbare Anzahl der Bauteil (2) die Schaltvorrichtung (28) zur Unterbrechung der Tätigkeit des Förderantriebes (8, 46) des Förderabschnittes (7, 43) und gegebenenfalls zur Aktivierung eines Stopgliedes (51) für die Bauteile (2) zwischen Förderweg (14, 45) und Förderabschnitt (7, 43) beaufschlagt ist und daß jeweils bei Beaufschlagung der ersten Überwachungsvorrichtung (21) im Entnahmebereich (19) durch einen Bauteil (2) die Schaltvorrichtung (28) zur Unterbrechung der Tätigkeit des Förderantriebes (16, 47) des Förderweges (14, 45) beaufschlagt ist und nach der Entnahme des Bauteiles (2) der Förderantrieb (16, 47) wieder aktiviert wird.

8. Vorrichtung nach Anspruch 6 oder 7, dadurch gekennzeichnet, daß dem Entnahmebereich (19) ein Überwachungsbereich der ersten Überwachungsvorrichtung (21) zugeordnet ist und bei Eintreten eines Bauteiles (2) in den Überwachungsbereich über die Schaltvorrichtung (28) der Förderantrieb (16, 47) des Förderweges (14, 45) stillgesetzt ist.

## Claims

1. Method of separating, feeding and extracting components (2), especially electronic circuit components, which are extracted from an unarranged quantity of components (2), separated and fed in a predetermined position to a withdrawal area (19), whereupon they are grasped and passed to a discharge point, wherein partial groups are drawn from the unarranged quantity of components (2) and are separated and mutually aligned along a conveying section (7, 43), during their displacement at a first conveying speed, whereupon the components (2) are passed via a post-connected conveyor path (14, 45) into the withdrawal area (19), characterized in that a transfer of each separate component (2) from the conveying section (7, 43) on to the conveyor path (14, 45) is detected and that consequent thereto, the conveying between the conveying section (7, 43) and the conveyor path (14, 45), or the withdrawal of partial quantities as well as the conveying in the conveying section (7, 43), are stopped, whereupon the conveying on the conveyor path (14, 45) is interrupted following the arrival of a single component (2) in the withdrawal area (19).

2. Method of separating, feeding and extracting components (2), especially electronic circuit components, which are extracted from an unarranged quantity of components (2), separated and fed in a predetermined position to a withdrawal area (19), whereupon they are grasped and passed to a discharge point, wherein partial groups are drawn from the unarranged quantity of components (2) and are separated and mutually aligned along a conveying section (7, 43) during their displacement at a first conveying speed, whereupon the components (2) are passed via a post-connected conveyor path (14, 15) into the withdrawal area (19) at a higher conveying speed than in the conveying section (7, 43), characterized in that a predeterminable number of components (2) passes over from the conveying section (7, 43) on to the conveyor path (14, 45) and their number is determined and that subsequent thereto the conveying between the conveying section (7, 43) and the conveyor path (14, 45), or the withdrawal of partial quantities as well as the conveying in the conveying section (7, 43), are stopped until the components (2) transferred on to the conveyor path (14, 45) prior to the interruption of the conveying in the conveying section (7, 43) have been singly and consecutively fed to the withdrawal area (19) and removed therefrom, in which connection the conveying on the conveyor path (14, 45) is also interrupted in each case after the arrival of a single component (2) in the withdrawal area (19) and is resumed after the removal of this component (2).

3. Method according to claim 1 or 2, characterized in that the partial groups are drawn from the unarranged quantity of components by being conveyed by means of vibration and that the conveying speed of the partial groups is lower than the first conveying speed in the conveying section.

4. Method according to claims 1, 2 or 3, characterized in that the components are acted upon within the conveying section and/or on the conveyor path by a directional vibratory force in the conveying direction, the amplitude in the conveying direction within the conveying section or in the component separation and alignment section amounting to a part only of the amplitude on the conveying path and/or in the withdrawal area.

5. Method according to one of claims 1 to 4, characterized in that a monitoring area of a monitoring element is arranged in the withdrawal area and that the conveying on the conveyor path is interrupted upon entry of the component into the monitoring area of the monitoring element.

6. Device (1) for separating, feeding and extracting components (2) for application of the method according to claim 1 or one of claims 3 to 5 in combination with claim 1, with a reception container (4, 38) for an unarranged quantity of components (2), with a conveying device (5, 40), with a conveying section (7, 43), with aligning and separating devices (11) as well as a conveying drive (8, 46) associated with these and having positioned after it a conveyor path (14, 45) which has further conveying drive (47) associated with it, with a first monitoring device (21) for the components (2) in the withdrawal area (19) and a handling mechanism (22) associated with the withdrawal area (19) with a gripper which in the reception position associated with the withdrawal area (19) has a reception area which extends at least over the projection surface of the component (2) extending parallel to the conveyor path, characterized in that a second monitoring device (17) with monitoring elements (18), associated with a conveyor path for the components (2), is arranged between the conveying section (7, 43) and the conveyor path (14, 45) and the conveying drive (8, 46) of the conveying section (7, 43) is connected via a switching device (28) to the second monitoring device (17), the switching device (28) being actuated upon actuation of the second monitoring device (17) by a component (2), for interruption of the operation of the conveying drive (8, 46) of the conveying section (7, 43) and if appropriate for actuation of a stop element (51) for the components (2) between the conveyor path (14, 45) and the conveying section (7, 43) and that upon actuation of the first monitoring device (21) in the withdrawal section (19) by a component (2), the switching device (28) is actuated for the purpose of interrupting the operation of the conveying drive (16, 47) of the conveyor path (14, 45).

7. Device (1) for separation, feeding and extraction of components (2) for application of the method according to claim 2 or one of claims 3 to 5 in combination with claim 2, with a reception container (4, 38) for an unarranged quantity of components (2), with a conveying device (5, 40) with a conveying section (7, 43), with aligning and separating devices (11) as well as a conveying drive (8, 46) associated with these and with a conveyor path (14, 45) positioned after the former, with further conveying drive (47) associated with it, with a first monitoring device (21) for the components (2) in the withdrawal area (19) and a handling mechanism (22) associated with the withdrawal area (19) with a gripper which in the reception position associated with the withdrawal area (19) has a reception area, which extends at least over the projection surface of the component (2) extending parallel to the conveyor path, characterized in that a second monitoring device (17) with monitoring elements (18), associated with a conveyor path of the components (2), is arranged between the conveying section (7, 43) and the conveyor path (14, 45) and the conveying drive (8, 46) of the conveying section (7, 43) is connected via a switching device (28) to the second monitoring device (17) which is coupled with a counter device (29), and the switching device (28) is actuated upon actuation of the second monitoring device (17) by a predeterminable number of components (2), to interrupt the operation of the conveying drive (8, 46) of the conveying section (7, 43), and if applicable to activate a stop element (51) for the components (2) between the conveyor path (14, 45) and the conveying section (7, 43), and that the switching device (28) is actuated to interrupt the operation of the conveying drive (16,47) of the conveyor path (14, 45) each time the first monitoring device (21) in the withdrawal area (19) is actuated by a component (2) and that the conveying drive (16, 47) is reactivated again after removal of the component (2).

8. Device according to claim 6 or 7, characterized in that associated with the withdrawal area (19) is a monitoring area of the first monitoring device (21) and that upon entry component (2) in the monitoring area, the conveying drive (16, 47) of the conveyor path (14, 45) is stopped by means of the switching device (28).

**Revendications**

1. Procédé pour séparer, amener et prélever des pièces détachées (2), en particulier des pièces de branchement électronique qui sont prélevées d'une quantité désordonnée de pièces détachées (2), séparées et amenées dans une position prédéterminée a une zone de prélèvement (19), après quoi elles sont saisies et amenées à une station de dépôt, dans lequel des groupes partiels sont prélevés de la quantité désordonnée de pièces détachées (2) et sont séparés et alignés dans une section de transport (7, 43) au cours du déplacement avec une première vitesse de transport, après quoi les pièces détachées (2) sont amenées dans une zone de prélèvement (19) par l'intermédiaire d'une voie de transport (14, 45) située en aval, caractérisé en ce qu'un passage de chaque pièce détachée (2) isolée depuis la section de transport (7, 43) sur la voie de transport (14, 45) est établi et qu'ensuite le transport entre la section de transport (7, 43) et la voie de transport (14, 45) ou le prélèvement de quantités partielles ainsi que le transport dans la section de transport (7, 43) est arrêté, après quoi le transport dans la voie de transport (14, 45) est interrompu après l'arrivée d'une pièce détachée (2) isolée dans la zone de prélèvement (19).

2. Procédé pour séparer amener et prélever des pièces détachées (2), en particulier des pièces de branchement électronique qui sont prélevées d'une quantité désordonnée de pièces détachées (2), séparées et amenées dans une position prédéterminée à une zone de prélèvement (19), après quoi elles sont saisies et amenées à une station de dépôt, dans lequel des groupes partiels sont prélevés de la quantité désordonnée de pièces détachées (2) et sont séparés et alignés au cours du déplacement avec une première vitesse de transport dans une section de transport (7, 43), après quoi les pièces détachées (2) sont amenées dans la zone de prélèvement (19) par l'intermédiaire d'une voie de transport (14, 45) située en aval avec une vitesse de transport plus élevée que dans la section de transport (7, 43), caractérisé en ce qu'un nombre prédéterminable de pièces détachées (2) passe de la section de transport (7, 43) sur la voie de transport (14, 45) et dont le nombre est déterminé puis le transport entre la section de transport (7, 43) et la voie de transport (14, 45) ou le prélèvement de quantités partielles ainsi que le transport dans la section de transport (7, 43) est arrêté aussi longtemps que les pièces détachées (2) passées sur la voie de transport (14, 45) avant l'interruption du transport dans la section de transport (7, 43) ont été conduites les unes après les autres et de façon isolée à la zone de prélèvement (19) et prélevées de celle-ci, le transport dans la voie de transport (14, 45) étant interrompu également chaque fois après l'arrivée d'une seule pièce détachée (2) dans la zone de prélèvement (19) et étant repris après le prélèvment de cette pièce détachée (2).

3. Procédé selon la revendication 1 ou 2, caractérisé en ce que les groupes partiels sont prélevés de la quantité désordonnée de pièces détachées par transport au moyen de vibrations et en ce que la vitesse de transport des groupes partiels est plus faible que la première vitesse de transport dans la section de transport.

4. Procédé selon la revendication 1, 2 ou 3, caractérisé en ce que les pièces détachées sont sollicitées par une force de vibration dirigée, dans la section de transport et/ou dans la voie de transport dans la direction de transport, l'amplitude dans la direction de transport dans la section de transport ou dans la zone d'isolement et d'alignement des pièces détachées représentant seulement une partie de l'amplitude dans la voie de transport et/ou dans la zone de prélèvement.

5. Procédé selon l'une des revendications 1 à 4, caractérisé en ce qu'une zone de surveillance d'un organe de surveillance est disposée dans la zone de prélèvement et en ce que le transport dans la voie de transport est interrompu lors de l'arrivée de la pièce détachée dans la zone de surveillance de l'organe de surveillance.

6. Dispositif (1) pour séparer, amener et prélever des pièces détachées (2) pour la mise en oeuvre du procédé selon la revendication 1, ou l'une des revendication 3 à 5 en combinaison avec la revendication 1, avec un réservoir de réception (4, 38) pour une quantité désordonnée de pièces détachées (2) avec un dispositif de transport (5, 40), avec une section de transport (7, 43), avec des dispositifs d'alignement et d'isolement (11) de même qu'un dispositif d'entraînement de transport (8, 46) associé à celui-ci et avec une voie de transport (14, 45) disposée en aval de ceux-ci avec un autre dispositif d'entraînement de transport (47) associé à celle-ci, avec un premier dispositif de surveillance (21) pour les pièces détachées (2) dans la zone de prélèvement (19) et un dispositif de manipulation (22) associé à la zone de prélèvement (19) avec un dispositif preneur qui présente dans la position de réception associée à la zone de prélèvement (19) une zone de réception qui s'étend au moins sur la surface de projection de la pièce détachée (2) s'étendant parallèlement à la voie de transport, caractérisé en ce qu un deuxième dispositif de surveillance (17) avec des organes de surveillance (18) associé à une bande transporteuse des pièces détachées (2) est disposé entre la section de transport (7, 43) et la voie de transport (14, 45) et que le dispositif d'entraînement de transport (8, 46) de la section de transport (7, 43) est relié au deuxième dispositif de surveillance (17) par l'intermédiaire d'un dispositif de commutation (28) et en ce que lors de la sollicitation du deuxième dispositif de surveillance (17) par une pièce détachée (2) le dispositif de commutation (28) est sollicité pour l'interruption de l'activité du dispositif d'entraînement de transport (8, 46) de la section de transport (7, 43) et éventuellement pour l'activation d'un élément d'arrêt (51) pour les pièces détachées (2) entre la voie de transport (14, 45) et la section de transport (7, 43) et en ce que lors de la sollicitation du premier dispositif de surveillance (21) dans la zone de prélèvement (19) par une pièce détachée (2) le dispositif de commutation (28) est sollicité pour l'interruption de l'activité du dispositif d'entraînement de transport (16, 47) de la voie de transport (14, 45).

7. Dispositif (1) pour séparer, amener et prélever des pièces détachées (2) pour la mise en oeuvre du procédé selon la revendication 2, ou l'une des revendications 3 à 5 en combinaison avec la revendication 2, avec un récipient de réception (4, 38) pour une quantité désordonnée de pièces détachées (2) avec un dispositif de transport (5, 40), avec une section de transport (7, 43), avec des dispositifs d'alignement et d'isolement (11) ainsi qu'un dispositif d'entraînement de transport (8, 46) associé à celui-ci et avec une voie de transport (14, 45) associée à celui-ci avec un autre dispositif d'entraînement de transport (47) associé à celle-ci, avec un premier dispositif de surveillance (21) pour les pièces détachées (2) dans la zone de prélèvement (19) et un dispositif de manipulation (22) associé à la zone de prélèvement (19) avec un dispositif preneur qui présente dans la position de réception associée à la zone de prélèvement (19) une zone de prélèvement qui s'étend au moins sur la surface de projection de la pièce détachée (2) s'étendant parallèlement à la voie de transport, caractérisé en ce qu'un deuxième dispositif de surveillance (17) avec des organes de surveillance (18) associé à une bande transporteuse des pièces détachées (2) est disposé entre la section de transport (7, 43) et la voie de transport (14, 45) et en ce que le dispositif d'entraînement de transport (8, 46) de la section de transport (7, 43) est relié par l'intermédiaire d'un dispositif de commutation (28) au deuxième dispositif de surveillance (17) qui est couplé à un dispositif de comptage (29) et en ce que lors de la sollicitation du deuxième dispositif de surveillance (17) par un nombre prédéterminable des pièces détachées (2) le dispositif de commutation (28) est sollicité pour l'interruption de l'activité du dispositif d'entraînement de transport (8, 46) de la section de transport (7, 43) et éventuellement pour l'activation d'un élément d'arrêt (51) pour les pièces détachées (2) entre la voie de transport (14, 45) et la section de transport (7, 43) et en ce qu'à chaque fois lors de la sollicitation du premier dispositif de surveillance (21) dans la zone de prélèvement (19) par une pièce détachée (2), le dispositif de commutation (28) est sollicité pour l'interruption de l'activité du dispositif d'entraînement de transport (16, 47) de la voie de transport (14, 45) et le dispositif d'entraînement de transport (16, 47) est de nouveau activé après le prélèvement de la pièce détachée (2).

8. Dispositif selon la revendication 6 ou 7, caractérisé en ce qu'une zone de surveillance du premier dispositif de surveillance (21) est associée à la zone de prélèvement (19) et en ce que lors de l'arrivée d'une pièce détachée (2) dans la zone de surveillance, le dispositif d'entraînement de transport (16, 47) de la voie de transport (14, 45) est arrêté par l'intermédiaire du dispositif de commutation (28).

**Fig. 2**

**Fig. 3**

1